# EUROPÄISCHE PATENTSCHRIFT

(11) **EP 2 376 815 B1**
(45) Veröffentlichungstag und Bekanntmachung des Hinweises auf die Patenterteilung: **08.01.2014**
(21) Anmeldenummer: 10700251.1
(22) Anmeldetag: 13.01.2010
(51) Int. Cl.: F16H 61/04, F16H 61/00, B60W 30/18

(54) **VERFAHREN ZUM BETREIBEN EINER GETRIEBEVORRICHTUNG EINES FAHRZEUGANTRIEBSSTRANGES**
METHOD FOR THE OPERATION OF A TRANSMISSION DEVICE OF A VEHICLE DRIVE TRAIN
PROCÉDÉ POUR FAIRE FONCTIONNER UN SYSTÈME DE TRANSMISSION DANS UNE CHAÎNE CINÉMATIQUE DE VÉHICULE

(30) Priorität: 15.01.2009 DE 102009000254
(43) Veröffentlichungstag der Anmeldung: 19.10.2011
(73) Patentinhaber: ZF Friedrichshafen AG, 88038 Friedrichshafen (DE)
(72) Erfinder: ARNOLD, Jörg, 88090 Immenstaad (DE); STEINHAUSER, Klaus, 88079 Kressbronn (DE); HERBETH, Valentine, 88045 Friedrichshafen (DE); POPP, Christian, 88079 Kressbronn (DE)
(86) Internationale Anmeldenummer: PCT/EP2010/050342
(87) Internationale Veröffentlichungsnummer: WO 2010/081820

(56) Entgegenhaltungen:
- EP-A1- 1 826 441
- WO-A1-2007/137680
- US-A1- 2004 118 652

## Beschreibung

Die Erfindung betrifft ein Verfahren zum Betreiben einer Getriebevorrichtung eines Fahrzeugantriebsstranges gemäß der im Oberbegriff des Patentanspruches 1 näher definierten Art.

Bei aus der Praxis bekannten Automatgetrieben, welche zur Darstellung verschiedener Übersetzungen neben reibschlüssigen Schaltelementen auch formschlüssige Schaltelemente aufweisen, besteht in ungünstigen Betriebszuständen die Möglichkeit, dass ein formschlüssige Schaltelement während eines Betriebszustandswechsels des Automatgetriebes bzw. während einer Schaltung nicht in gewünschtem Umfang aus einem geöffneten Betriebszustand, während dem Schaltelementhälften des formschlüssigen Schaltelementtes außer Eingriff sind, in einen geschlossenen Betriebszustand, während dem die Schaltelementhälften formschlüssig drehfest miteinander verbunden sind, überführbar ist.

Dies ist beispielsweise bei Vorliegen eines Zwischenbetriebszustandes eines formschlüssigen Schaltelementes der Fall, zu dem die Schaltelementhälften ohne drehfeste Verbindung in einer sogenannten Zahn-auf-Zahn-Stellung aneinander anliegen und mit der gleichen Drehzahl rotieren, so dass zwischen Schaltelementhälften des formschlüssigen Schaltelementes eine für den gewünschten Formschluss im Bereich des formschlüssigen Schaltelementes zu geringe Drehzahldifferenz vorliegt. Während eines solchen Zwischenbetriebszustandes eines formschlüssigen Schaltelementes liegt im Bereich eines formschlüssigen Schaltelementes zwischen den Schaltelementhälften eine reibschlüssige Verbindung vor, die sich erst bei Überschreiten eines bestimmten Lastpunktes schlagartig auflöst, wobei sich der Formschluss im Bereich des Schaltelementes dann unerwünschterweise zu einem nur schwer vorher bestimmbaren Zeitpunkt einstellt.

Darüber hinaus werden vorliegend auch Betriebszustände von formschlüssigen Schaltelementen als Zwischenbetriebszustände bezeichnet, während welchen zwischen den Schaltelementhälften eines formschlüssigen Schaltelementes eine einem Formschluss entgegenstehende zu hohe Drehzahldifferenz vorliegt. Dies ist in Abhängigkeit einer konstruktiven Ausführung eines Antriebsstranges insbesondere nach einer Inbetriebnahme eines Fahrzeuges der Fall.

Aus der DE 197 56 637 A1 ist eine Schalteinrichtung zur Verbindung von mit unterschiedlichen Drehzahlen rotierenden Bauteilen eines Getriebes mit wenigstens einer Schaltgruppe bekannt, wobei die Schalteinrichtung von einem Steuerfluid betätigt wird. Im Betrieb der Getriebeeinrichtung wird ein aktueller Betriebszustand der wenigstens ein formschlüssiges Schaltelement aufweisenden Schaltgruppe überwacht, wobei bei Vorliegen einer Zahn-auf-Zahn-Stellung der zu verbindenden Verzahnung eine Synchronkraft im Bereich des formschlüssigen Schaltelementes minimiert wird, um während der Synchronisierung des zu schließenden formschlüssigen Schaltelementes ein Schleppmoment zu erzeugen, mittels welchem die Zahn-auf-Zahn-Stellung aufgehoben werden soll.

Die vorgeschlagene Vorgehensweise zur Aufhebung einer Zahn-auf-Zahn-Stellung im Bereich eines formschlüssigen Schaltelementes setzt die nur mit erheblichem Aufwand ermittelbare exakte Kenntnis des aktuellen Betriebszustandes des formschlüssigen Schaltelementes voraus, um die Synchronkraft in dem für die Auflösung der Zahn-auf-Zahn-Stellung erforderlichen Umfang zu minimieren.

Den Stand der Technik nach dem Oberbegriff des Anspruchs 1 stellt hier die US 2004/0118652.

Der vorliegenden Erfindung liegt daher die Aufgabe zugrunde, ein Verfahren zum Betreiben einer Getriebevorrichtung eines Fahrzeugantriebsstranges zur Verfügung zu stellen, mittels welchem ein Zwischenbetriebszustand eines Schaltelementes bzw. eine Zahn-auf-Zahn-Stellung eines formschlüssigen Schaltelementes ohne exakte Kenntnis des aktuellen Betriebszustandes des formschlüssigen Schaltelementes auf einfache und kostengünstige Art und Weise auflösbar ist.

Erfindungsgemäß wird diese Aufgabe mit einem Verfahren mit den Merkmalen des Patentanspruches 1 gelöst.

Bei dem erfindungsgemäßen Verfahren zum Betreiben einer Getriebevorrichtung eines Fahrzeugantriebsstranges mit wenigstens einer Antriebsmaschine, wobei die Getriebevorrichtung zur Darstellung verschiedener Übersetzungen mit wenigstens einem formschlüssige Schaltelement und mehreren reibschlüssigen Schaltelementen ausgebildet ist und während eines Schließvorganges des formschlüssigen Schaltelementes ausgehend von einem geöffneten Betriebszustand, während dem Schaltelementhälften des formschlüssigen Schaltelementes außer Eingriff sind, in einen geschlossenen Betriebszustand, während dem die Schaltelementhälften formschlüssig drehfest miteinander verbunden sind, wird bei Vorliegen eines Zwischenbetriebszustandes des formschlüssigen Schaltelementes, während dem ein Formschluss zwischen den Schaltelementhälften verhindert ist, zumindest zeitweise eine Drehzahldifferenz zwischen den Schaltelementhälften erzeugt, zu der der Formschluss im Bereich des formschlüssigen Schaltelementes einlegbar ist.

Erfingdungsgemäß wird zur Herstellung einer Drehzahldifferenz zwischen den Schaltelementhälften des formschlüssigen Schaltelementes zumindest die Übertragungsfähigkeit eines reibschlüssigen Schaltelementes angehoben.

Damit ist der Zwischenbetriebszustand eines formschlüssigen Schaltelementes, der beispielsweise einer Zahn-auf-Zahn-Stellung eines formschlüssigen Schaltelementes entspricht, ohne exakte Kenntnis des aktuellen Betriebszustandes des formschlüssigen Schaltelementes rein funktional auf einfache und kostengünstige Art und Weise durch Anheben der Übertragungsfähigkeit mindestens eines bereits in der Getriebevorrichtung vorhandenen reibschlüssigen Schaltelementes auflösbar.

Zusätzlich ist ein formschlüssiges Schaltelement mittels der erfindungsgemäßen Vorgehensweise aus Zwischenbetriebszuständen bzw. aus undefinierten Betriebszuständen, die beispielsweise in einer Getriebevorrichtung nach einer ersten Inbetriebnahme einer Antriebsmaschine des Fahrzeugantriebsstranges vorliegen und während welchen zwischen den Schaltelementhälften eines formschlüssigen Schaltelementes für die Herstellung des Formschlusses eine zu hohe Differenzdrehzahl vorliegt, in einen für einen Schließvorgang des formschlüssigen Schaltelementes erforderlichen Betriebszustand überführbar. Das bedeutet, dass die Differenzdrehzahl zwischen den Schaltelementhälften des formschlüssigen Schaltelementes durch Anheben der Übertragungsfähigkeit des reibschlüssigen Schaltelementes auf einen für die Herstellung des Formschlusses im Bereich des formschlüssigen Schaltelementes erforderlichen Wert einstellbar ist.

Bei der erfindungsgemäß vorgeschlagenen Vorgehensweise ist die Kenntnis des exakten Betriebspunktes eines formschlüssigen Schaltelementes bei Vorliegen eines Zwischenbetriebszustandes im Vergleich zu der aus dem Stand der Technik bekannten Vorgehensweise nicht erforderlich, da während des erfindungsgemäßen Verfahrens der Betriebszustand des formschlüssigen Schaltelementes nicht direkt durch Variieren einer Betätigung des formschlüssigen Schaltelementes, verändert wird, sondern durch ein Anheben der Übertragungsfähigkeit von zumindest einem reibschlüssigen Schaltelement der Getriebevorrichtung. Dabei bewirkt das Anheben der Übertragungsfähigkeit des reibschlüssigen Schaltelementes im Bereich des formschlüssigen Schaltelementes eine Differenzdrehzahl zwischen den Schaltelementhälften des formschlüssigen Schaltelementes, zu der dieses geschlossen werden kann.

Zur Erzeugung der Drehzahldifferenz wird eine Übertragungsfähigkeit des reibschlüssigen Schaltelementes bei einer vorteilhaften Variante des erfindungsgemäßen Verfahrens bei zumindest einem geschlossenen weiteren Schaltelement angehoben, wobei über das reibschlüssige Schaltelement und das weitere Schaltelement in geschlossenem Zustand eine Übersetzung der Getriebevorrichtung darstellbar ist.

Das formschlüssige Schaltelement ist zur Darstellung der über das reibschlüssige Schaltelement und das weitere Schaltelement in der Getriebevorrichtung einlegbaren Übersetzung bei einer weiteren vorteilhaften Variante des Verfahrens aus dem Kraftfluss der Getriebevorrichtung abgeschaltet.

Bei einer durch einen geringen Steuer- und Regelaufwand gekennzeichneten Variante des Verfahrens nach der Erfindung ist der Zwischenbetriebszustand des formschlüssigen Schaltelementes in Abhängigkeit der Betätigungskraft des formschlüssigen Schaltelementes oder einer hierzu äquivalenten Betriebsgröße der Getriebevorrichtung ermittelbar, wobei die Betriebsgröße vorzugsweise ein Betätigungsdruck des formschlüssige Schaltelementes ist.

Zusätzlich oder alternativ hierzu ist der Zwischenbetriebszustand des formschlüssigen Schaltelementes bei einer weiteren vorteilhaften Variante des erfindungsgemäßen Verfahrens über eine dem formschlüssigen Schaltelement zugeordnete Wegerfassungseinrichtung und/oder über eine Kontakterkennungseinrichtung ermittelbar, wobei die Kontakterkennungseinrichtung vorzugsweise elektrisch oder elektromagnetisch betreibbar ist.

Weitere Vorteile und vorteilhaften Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: ein Räderschema einer Getriebevorrichtung;
- Fig. 2: ein Schaltschema der Getriebevorrichtung gemäß Fig. 1;
- Fig. 3: mehrere Verläufe verschiedener Betriebszustandsparameter der Getriebeverrichtung gemäß Fig. 1 während einer Betriebszustandsänderung der Getriebevorrichtung ausgehend von einem Neutralbetriebszustand in eine Übersetzung für Vorwärtsfahrt; und
- Fig. 4: mehrere Verläufe verschiedener Betriebszustandsparameter der Getriebevorrichtung gemäß Fig. 1 und eines die Getriebevorrichtung aufweisenden Fahrzeugantriebsstranges.

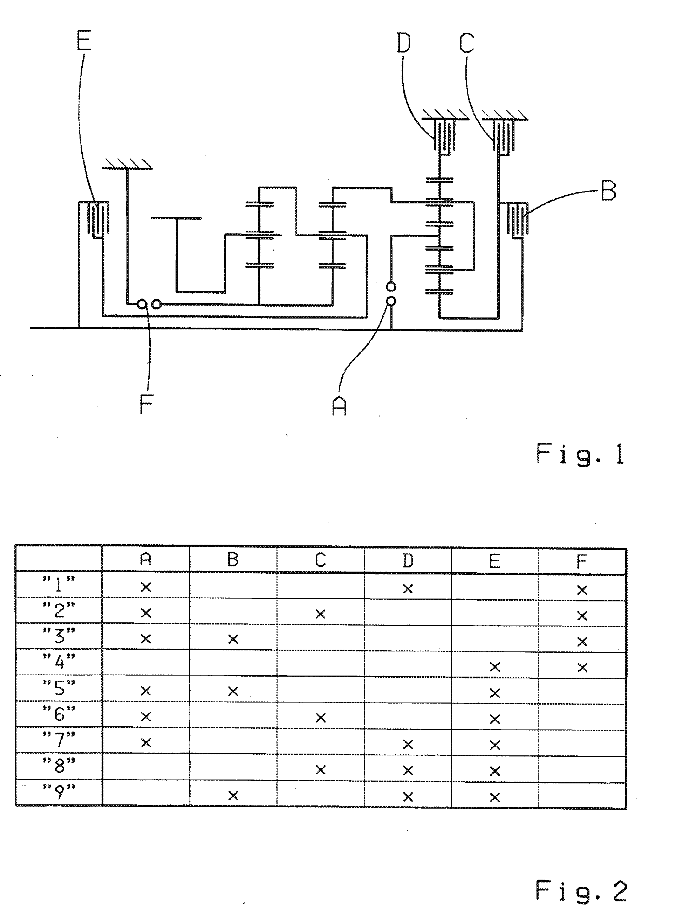

Fig. 1 zeigt ein Räderschema einer Getriebevorrichtung 1 mit zwei formschlüssigen Schaltelementen A und F sowie mit vier reibschlüssigen Schaltelementen B, C, D und E. Über die Schaltelemente A bis F sind verschiedene Wellen der vorliegend als Planetengetriebe ausgeführten Getriebevorrichtung 1 zur Darstellung verschiedener Übersetzungen "1" bis "9" in der dafür jeweils erforderlichen Art und Weise miteinander verbindbar.

Zur Darstellung der Übersetzungen "1" bis "9" sind jeweils mehrere der Schaltelemente A bis F in den Kraftfluss der Getriebevorrichtung 1 zuzuschalten, wobei die jeweils in den Kraftfluss zugeschalteten Schaltelemente A bis F in dem in Fig. 2 dargestellten Schaltschema durch ein X gekennzeichnet sind, während die anderen Schaltelemente sich jeweils in geöffnetem Betriebszustand befinden. So sind beispielsweise die Schaltelemente A, D und F zur Darstellung der ersten Übersetzung "1" in den Kraftfluss der Getriebevorrichtung 1 zuzuschalten, während sich die Schaltelemente B, C und E gleichzeitig in vollständig geöffnetem Betriebszustand befinden. Generell sind bis auf die vierte Übersetzung "4", zu deren Darstellung lediglich die beiden Schaltelemente E und F in den Kraftfluss der Getriebevorrichtung 1 zuzuschalten sind, jeweils drei der Schaltelemente A bis F in geschlossenen Betriebszustand zu überführen bzw. in den Kraftfluss der Getriebevorrichtung 1 zuzuschalten, um in der Getriebevorrichtung 1 eine der Übersetzungen "1" bis "3" bzw. "5" bis "9" einzulegen.

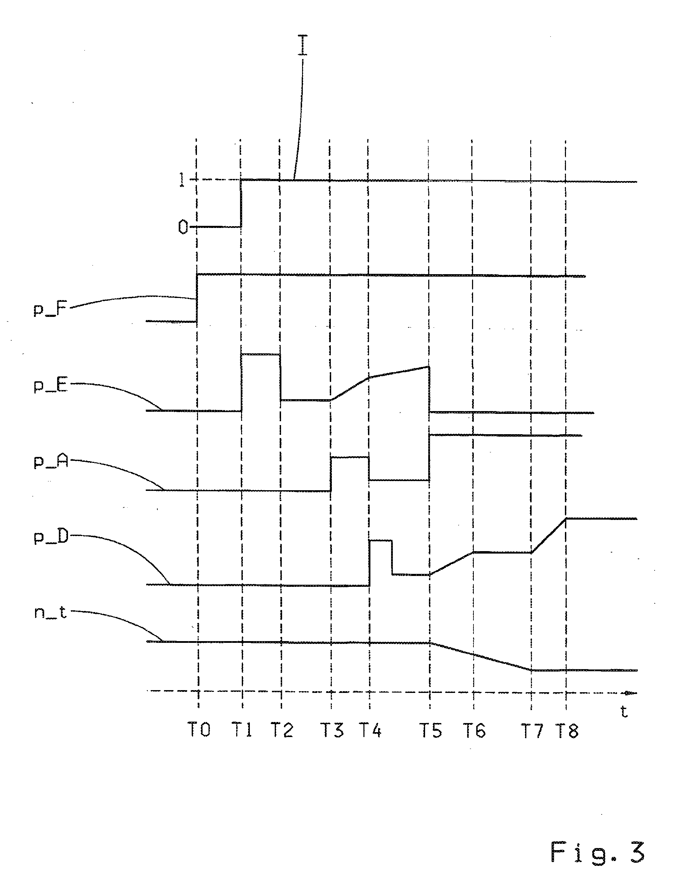

In Fig. 3 sind über der Zeit t mehrere Verläufe verschiedener Betriebszustandsparameter der Getriebevorrichtung gemäß Fig. 1 während einer Betriebszustandsänderung der Getriebevorrichtung 1 ausgehend von einem Neutralbetriebszustand, während dem das Schaltelement F vollständig geschlossen ist und die weiteren Schaltelemente A bis E im Wesentlichen vollständig geöffnet sind, in Richtung eines Betriebszustandes, während welchem in der Getriebevorrichtung 1 die erste Übersetzung "1" eingelegt ist, dargestellt.

Zu einem Zeitpunkt T0 wird zunächst ein Betätigungsdruck p_F des Schaltelementes F angehoben und das Schaltelement F geschlossen. Zu einem weiteren Zeitpunkt T1 ergeht von einer nicht näher dargestellten elektrischen Getriebesteuerung der Getriebevorrichtung 1 eine Schaltanforderung ausgehend vom Neutralbetriebszustand der Getriebevorrichtung 1 in die erste Übersetzung "1". Dies hat zur Folge, dass ein Verlauf I sprungartig vom Wert 0 auf den Wert 1 ansteigt. Gleichzeitig wird ein Kolbenraum des Schaltelementes E der Getriebevorrichtung 1 in der in Fig. 3 näher dargestellten Art und Weise ab dem Zeitpunkt T1 während eines Schnellfüllpulses des Betätigungsdruckes p_E, der zu einem Zeitpunkt T2 endet, vorbefüllt und ein Betätigungskolben des fluidisch betätigbaren Schaltelementes E während einer sich daran anschließenden Füllausgleichsphase, die zu einem Zeitpunkt T3 endet, an ein Lamellenpaket des vorliegend als Lamellenkupplung ausgeführten reibschlüssigen Schaltelementes E in an sich bekannter Art und Weise angelegt.

Zum Zeitpunkt T3 wird ein Betätigungsdruck p_A des formschlüssigen Schaltelementes A angehoben, welches zur Darstellung der ersten Übersetzung "1" ebenfalls in den Kraftfluss der Getriebevorrichtung 1 zuzuschalten ist. Gleichzeitig wird der Betätigungsdruck p_E des Schaltelementes E ab dem Zeitpunkt T3 über eine Druckrampe angehoben, womit die Übertragungsfähigkeit des Schaltelementes E ansteigt. Zwischen dem Zeitpunkt T3 und einem Zeitpunkt T4 wird ein Zwischenbetriebszustand des formschlüssige Schaltelementes A, während dem Schaltelementhälften des formschlüssigen Schaltelementes ohne drehfeste Verbindung wenigstens annähernd reibschlüssig aneinander anliegen und wenigstens annähernd mit der gleichen Drehzahl rotieren, bzw. eine sogenannte Zahn-auf-Zahn-Stellung ermittelt, welche ein vollständiges Schließen des formschlüssigen Schaltelementes A verhindert.

Ist während einer Lastschaltung, an der ein reibschlüssiges Schaltelement und ein formschlüssiges Schaltelement beteiligt sind, der Formschluss im Bereich des formschlüssigen Schaltelementes trotz vorliegender Kraftausübung, welche beispielsweise durch einen elektrischen Steller, eine hydraulische oder pneumatische Kraftaufbringung oder dergleichen auf das formschlüssige Schaltelement ausgeübt wird, aufgrund einer Zahn-auf-Zahn-Stellung oder einer zu hohen Differenzdrehzahl zwischen den Schaltelementhälften nicht herstellbar, ist dies beispielsweise über einen Druckanstieg in der Zuleitung oder in einem Kolbenraum des formschlüssige Schaltelementes feststellbar. Dabei besteht beispielsweise die Möglichkeit, bei einer Betätigung des formschlüssigen Schaltelementes über einen hydraulischen Betätigungsdruck mittels einer in der Zuleitung oder im Kolbenraum des formschlüssigen Schaltelementes angeordneten Druckmesseinrichtung die im Fall eines nicht zustande kommenden Formschlusses auftretende Druckspitze zu ermitteln und in Relation zur vorliegenden Übersetzungsabweichung zu stellen.

Zusätzlich oder alternativ hierzu ist eine Betätigung eines formschlüssigen Schaltelementes mittels einer dem formschlüssigen Schaltelement zugeordneten Wegerfassungseinrichtung, die einen Wegsensor umfasst, und das Nichtzustandekommen des Formschlusses im Bereich des formschlüssigen Schaltelementes verifizierbar.

Wiederum alternativ oder zusätzlich hierzu besteht auch die Möglichkeit, jede Art der Betätigung eines formschlüssigen Schaltelementes und das Nichtzustandekommen des Formschlusses im Bereich eines formschlüssigen Schaltelementes mittels einer elektrischen oder elektromagnetischen Messeinrichtung zu ermitteln, wobei dies beispielsweise über eine geeignete Kontakterkennung realisierbar ist.

Um die Zahn-auf-Zahn-Stellung im Bereich des formschlüssigen Schaltelementes A mit geringen Reaktionsmomenten in der Getriebevorrichtung 1 auflösen zu können, wird der Betätigungsdruck p_A des Schaltelementes A vorliegend zum Zeitpunkt T4 abgesenkt. Gleichzeitig wird die Übertragungsfähigkeit des reibschlüssigen Schaltelementes E ab dem Zeitpunkt T4 über eine im Vergleich zu der zwischen den Zeitpunkten T3 und T4 vorgesehenen Druckrampe flachere Druckrampe bis zu einem Zeitpunkt T5 weiter angehoben. Dies führt dazu, dass in der Getriebevorrichtung 1 zunehmend die vierte Übersetzung "4" eingelegt wird und im Bereich der Schaltelementhälften des formschlüssigen Schaltelementes A eine Differenzdrehzahl erzeugt, die die Zahn-auf-Zahn-Stellung im Bereich des formschlüssigen Schaltelementes A auflöst.

Zum Zeitpunkt T5 liegt das Schaltelement A mit der zum Schließen erforderlichen Differenzdrehzahl vor und das Schaltelement A wird durch Anheben des Betätigungsdruckes p_A geschlossen. Wiederum gleichzeitig wird der Betätigungsdruck p_E des reibschlüssigen Schaltelementes E zum Zeitpunkt T5 sprungförmig im Wesentlichen auf Null abgesenkt und die Übertragungsfähigkeit des Schaltelementes E fällt dadurch ebenfalls im Wesentlichen auf Null ab, womit über das Schaltelement E kein Drehmoment mehr führbar ist.

Um die angeforderte Schaltung ausgehend vom Neutralbetriebszustand in Richtung der ersten Übersetzung "1" innerhalb einer vordefinierten Schaltzeit durchführen zu können, wird das ebenfalls zur Darstellung der ersten Übersetzung "1" in den Kraftfluss der Getriebevorrichtung zuzuschaltende und vorliegend als reibschlüssige Bremse ausgeführte Schaltelement D in der in Fig. 3 näher dargestellten Art und Weise mit einem Betätigungsdruck p_D über einen Schnellfüllpuls und einer sich daran anschließenden Füllausgleichsphase mit Fluid beaufschlagt und bis zum Zeitpunkt T5 für die Zuschaltung vorbereitet. Ab dem Zeitpunkt T5 wird der Betätigungsdruck p_D des Schaltelementes D über eine zu einem Zeitpunkt T6 endende erste Druckrampe angehoben und bis zu einem Zeitpunkt T7 auf diesem Druckniveau belassen.

Die Steigerung des Betätigungsdruckes p_D des Schaltelementes D zwischen den Zeitpunkten T5 und T6 sowie die konstante Druckbeaufschlagung des Schaltelementes D bis zum Zeitpunkt T7 bewirkt, dass eine Getriebeeingangsdrehzahl n_t zwischen den Zeitpunkten T5 und T7 von der Synchrondrehzahl bzw. der Motorleerlaufdrehzahl der Antriebsmaschine des Fahrzeugantriebsstranges auf das Niveau der Synchrondrehzahl der ersten Übersetzung "1" geführt wird.

Zum Zeitpunkt T7, zu dem die Getriebeeingangsdrehzahl n_t die Synchrondrehzahl der ersten Übersetzung "1" erreicht hat, wird der Betätigungsdruck p_D über eine zweite Druckrampe, welche bis zu einem Zeitpunkt T8 andauert, auf den Schließdruck des Schaltelementes D angehoben, womit die angeforderte Schaltung bzw. Betriebszustandsänderung der Getriebevorrichtung beendet ist.

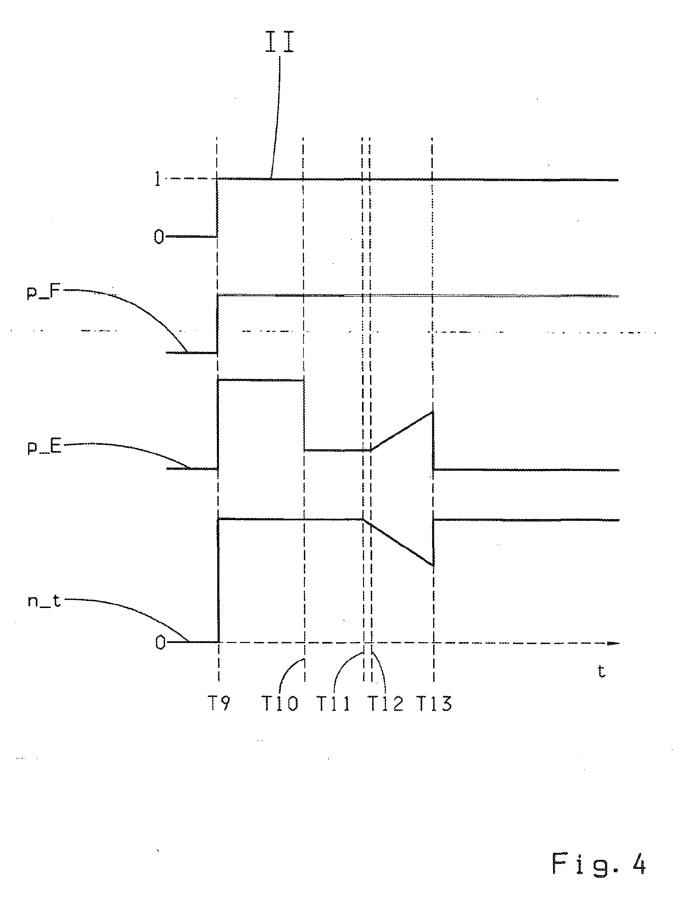

In Fig. 4 sind mehrere Verläufe verschiedener Betriebsparameter eines mit der Getriebevorrichtung 1 ausgeführten Fahrzeugantriebsstranges während eines Betriebszustandsverlaufes des Fahrzeugantriebsstranges gezeigt, während dem eine abgeschaltete Antriebsmaschine des Fahrzeugantriebsstranges gestartet wird. Die Schaltelemente A bis F der Getriebevorrichtung 1 befinden sich vor dem Startzeitpunkt T0 der Antriebsmaschine alle in vollständig geöffnetem Betriebszustand. Dies resultiert aus der Tatsache, dass eine die Schaltelemente A bis F mit Betätigungsdruck beaufschlagende Hydraulikpumpe bei abgeschalteter Antriebsmaschine keinen Fluiddruck erzeugt und die Schaltelemente A bis F aufgrund ihrer konstruktiven Ausführung ohne entsprechende Druckbeaufschlagung in einen vollständig geöffneten Betriebszustand übergehen.

Zum Zeitpunkt T0 wird die Antriebsmaschine gestartet, weshalb ein Verlauf II zum Zeitpunkt T0 sprungartig vom Wert 0 auf den Wert 1 umspringt. Der Betätigungsdruck p_F des ebenfalls als formschlüssiges Schaltelement ausgeführten Schaltelementes F steigt bei gestarteter Antriebsmaschine an. Wiederum gleichzeitig wird das in Bezug auf das formschlüssige Schaltelement F getriebeeingangsseitig angeordnete Schaltelement E zwischen dem Zeitpunkt T9 und einem Zeitpunkt T10 mit einem Schnellfüllpuls und während einer sich daran anschließenden und zu einem Zeitpunkt T11 endenden Füllausgleichsphase für die zumindest teilweise Zuschaltung des Schaltelementes E vorbereitet. Die Getriebeeingangsdrehzahl n_t entspricht vorliegend zwischen den Zeitpunkten T9 und einem dem Zeitpunkt T11 zeitlich vorgelagerten Zeitpunkt T12 der Leerlaufdrehzahl der Antriebsmaschtne.

Das formschlüssige Schaltelement F befindet sich nach dem Motorstart in einem undefinierten Betriebszustand bzw. unter Umständen in einem Zwischenbetriebszustand mit einer Differenzdrehzahl, zu der das Schaltelement F nicht schließbar ist. Dabei besteht in ungünstigen Betriebszuständen der Getriebevorrichtung 1 die Möglichkeit, dass die Schaltelementhälften des formschlüssigen Schaltelementes F aufgrund einer Zahn-auf-Zahn-Stellung ohne drehfeste Verbindung wenigstens annähernd reibschlüssig aneinander anliegen und mit der gleichen Drehzahl rotieren, weshalb das Schaltelement F nicht in der gewünschten Art und Weise formschlüssige drehfest geschlossen werden kann.

Darüber hinaus besteht jedoch auch die Möglichkeit, dass das formschlüssige Schaltelement nach dem Starten der Antriebsmaschine einen Zwischenbetriebszustand aufweist, zu dem zwischen den Schaltelementhälften eine für die Zuschaltung des Schaltelementes F zu hohe Differenzdrehzahl vorliegt.

Während beiden Betriebszuständen des Schaltelementes F ist über das Schaltelement F dennoch ein gewisser Drehmomentwert führbar, weshalb die Getriebeeingangsdrehzahl zum Zeitpunkt T12, zu dem auch über das reibschlüssige Schaltelement E Drehmoment führbar ist, ausgehend von der Leerlaufdrehzahl der Antriebsmaschine des Fahrzeugantriebsstranges in Richtung der Synchrondrehzahl der vierten Übersetzung absinkt, wenn der Betätigungsdruck p_E des reibschlüssigen Schaltelementes E ab dem Zeitpunkt T11 über eine Druckrampe bis zu einem Zeitpunkt T13 in der dargestellten Art und Weise angehoben wird. Über einen Drehzahlsensor wird im Bereich der Getriebeeingangsdrehzahl n_t zum Zeitpunkt T13 ermittelt, dass ein vordefinierter Drehzahlwert der Getriebeeingangsdrehzahl unterschritten wird und ein Drehzahleinzug vorliegt, der nur bei vollständig geschlossenem Schaltelement F und bei gleichzeitig entsprechender Übertragungsfähigkeit des reibschlüssigen Schaltelementes E vorliegt.

Damit wird zum Zeitpunkt T13 ein durch die Anhebung der Übertragungsfähigkeit des Schaltelemente E verursachtes erfolgreiches Auflöten der Zahn-auf-Zahn-Stellung im Bereich des formschlüssigen Schaltelementes F erkannt. Sobald der Drehzahleinzug erkannt wird, wird die kraftschließende Kupplung bzw. das kraftschließende Schaltelement E durch sprungartiges Absenken des Betätigungsdruckes p_E des Schaltelementes E wieder geöffnet.

Bei letztbeschriebener Vorgehensweise wird nach einem Motorstart nicht direkt versucht die formschlüssige Kupplung bzw. das formschlüssige Schaltelement F ausgehend von einem undefinierten Betriebszustand des Schaltelementes F zu schließen. Das formschlüssige Schaltelement F wird durch Anheben der Übertragungsfähigkeit des reibschlüssigen Schaltelementes E in einen definierten Betriebszustand überführt und dabei geschlossen, womit Zwischenbetriebszustände, wie Zahn-auf-Zahn-Stellungen im Bereich eines formschlüssigen Schaltelementes, auf einfache und kostengünstige Art und Weise auflösbar sind.

Grundsätzlich werden mittels des erfindungsgemäßen Verfahrens Betriebszustände einer Getriebevorrichtung eines Fahrzeugantriebsstranges erkannt, während welche ein zur Übertragung eines Drehmomentes im Bereich eines formschlüssigen Schaltelementes erforderlicher Formschluss aufgrund einer Zahn-auf-Zahn-Stellung oder auch einer zu hohen Differenzdrehzahl zwischen den Schaltelementhälften eines formschlüssigen Schaltelementes nicht herstellbar ist. Zusätzlich wird eine Getriebevorrichtung mittels des erfindungsgemäßen Verfahrens derart betätigt, dass derartige Zwischenbetriebszustände funktional aufgelöst werden, wobei eine angeforderte Schaltung in der Getriebevorrichtung bei ungünstigen Betriebszustandsverläufen, während welchen ein Zwischenbetriebszustand eines formschlüssigen Schaltelement nicht beseitigbar ist, auch abgebrochen werden kann.

### Bezugszeichen

- "1" bis "9": Übersetzung
- A bis F: Schaltelement
- 1: Getriebevorrichtung
- I, II: Verlauf
- n_t: Getriebeeingangsdrehzahl
- p: Betätigungsdruck
- t: Zeit
- T0 bis T13: Zeitpunkt

## Patentansprüche

1. Verfahren zum Betreiben einer Getriebevorrichtung (1) eines Fahrzeugantriebsstranges mit wenigstens einer Antriebsmaschine, wobei die Getriebevorrichtung (1) zur Darstellung verschiedener Übersetzungen mit wenigstens einem formschlüssigen Schaltelement (A, F) und mehreren reibschlüssigen Schaltelementen (B, C, D, E) ausgebildet ist und während eines Schließvorganges des formschlüssigen Schaltelementes (A, F) ausgehend von einem geöffneten Betriebszustand, während dem Schaltelementhälften des formschlüssigen Schaltelementes (A, F) außer Eingriff sind, in einen geschlossenen Betriebszustand, während dem die Schaltelementhätften formschlüssig drehfest miteinander verbunden sind, und bei Vorliegen eines Zwischenbetriebszustandes des formschlüssigen Schaltelementes (A, F), zu dem ein Formschluss zwischen den Schaltelementhälften verhindert ist, zumindest zeitweise eine Drehzahldifferenz zwischen den Schaltelementhälften erzeugt wird, zu der der Formschluss im Bereich des formschlüssigen Schaltelementes (A, F) einlegbar ist, wobei zur Herstellung der Drehzahldifferenz zwischen den Schaltelementhälften des formschlüssigen Schaltelementes (A, F) zumindest die Übertragungsfähigkeit eines reibschlüssigen Schaltelementes (E) angehoben wird, **dadurch gekennzeichnet, dass** nach dem Schließen des formschlüssigen Schaltelements (A, F) die Übertragungsfähigkeit des reibschlüssigen Schaltelements (E) im Wesentlichen auf Null abgesenkt wird, wodurch kein Drehmoment mehr über das reibschlüssige Schaltelement (E) geführt werden kann, und wobei nach dem Absenken der Übertragungsfähigkeit des reibschlüssigen Schaltelements ein weiteres Schaltelement (D) in den Kraftfluss der Getriebevorrichtung (1) zugeschaltet wird.

2. Verfahren nach Anspruch 1, **dadurch gekennzeichnet, dass** zur Erzeugung der Drehzahldifferenz eine Übertragungsfähigkeit des reibschlüssigen Schaltelementes (E) bei zumindest einem geschlossenen weiteren Schaltelement (F) angehoben wird, wobei über das reibschlüssige Schaltelement (E) und das weitere Schaltelement (F) in geschlossenem Zustand eine Übersetzung ("4") der Getriebevorrichtung (1) darstellbar ist.

3. Verfahren nach Anspruch 2, **dadurch gekennzeichnet, dass** das formschlüssige Schaltelement (A) zur Darstellung der über das reibschlüssigen Schaltelement (E) und das weitere Schaltelement (F) in der Getriebevorrichtung einlegbaren Übersetzung ("4") aus dem Kraftfluss der Getriebevorrichtung (1) abgeschaltet ist.

4. Verfahren nach einem der Ansprüche 1 bis 3, **dadurch gekennzeichnet, dass** die Schaltelemente (A bis F) fluidisch betätigbar sind und das reibschlüssige Schaltelement (E) bei geschlossenem weiteren Schaltelement (F) während eines Schnellfüllpulses vorbefüllt wird.

5. Verfahren nach Anspruch 4, **dadurch gekennzeichnet, dass** die Übertragungsfähigkeit des relbschlüssigen Schaltelementes (E) nach Ablauf einer sich an den Schnellfüllpuls anschließenden Füllausgleichsphase angehoben wird.

6. Verfahren nach Anspruch 5, **dadurch gekennzeichnet, dass** eine das formschlüssige Schaltelement (A) wenigstens annähernd aus dem geöffneten Betriebszustand in den geschlossenen Betriebszustand überführende Betätlgungskraft des formschlüssigen Schaltelementes (A) während oder nach der Füllausgleichsphase des reibschlüssigen Schaltelementes (E) angehoben wird.

7. Verfahren nach Anspruch 6, **dadurch gekennzeichnet, dass** die Betätigungskraft des formschlüssigen Schaltelementes (A) bei Erkennen des Zwischenbetriebszustandes abgesenkt und zur Erzeugung der Drehzahldifferenz zwischen den Schaltelementhälften die Übertragungsfähigkeit des reibschlüssigen Schaltelementes (E) angehoben wird.

8. Verfahren nach Anspruch 6 oder 7, **dadurch gekennzeichnet, dass** bei Vorliegen einer Drehzahldifferenz zwischen den Schaltelementhälften des formschlüssigen Schaltelementes (A) die Betätigungskraft des formschlüssigen Schaltelementes (A) angehoben und das formschlüssige Schaltelement (A) in den geschlossenen Betriebszustand überführt wird, wobei die Übertragungsfähigkeit des reibschlüssigen Schaltelementes (E) bei geschlossenem formschlüssigem Schaltelement (A) wenigstens annähernd auf Null herabgesetzt wird.

9. Verfahren nach einem der Ansprüche 1 bis 8, **dadurch gekennzeichnet, dass** der Zwischenbetriebszustand des formschlüssigen Schaltelementes (A, F) in Abhängigkeit eines Drehzahlsignals (n_t) einer Welle der Getriebevorrichtung (1) bestimmbar ist.

10. Verfahren nach einem der Ansprüche 1 bis 9, **dadurch gekennzeichnet, dass** der Zwischenbetriebszustand des formschlüssigen Schaltelementes in Abhängigkeit der Betätigungskraft des formschlüssigen Schaltelementes oder einer hierzu äquivalenten Betriebsgröße der Getriebevorrichtung ermittelbar ist.

11. Verfahren nach Anspruch 10, **dadurch gekennzeichnet, dass** die Betriebsgröße ein Betätigungsdruck des formschlüssigen Schaltelementes ist.

12. Verfahren nach einem der Ansprüche 1 bis 11, **dadurch gekennzeichnet, dass** der Zwischenbetriebszustand des formschlussigen Schaltelementes über eine dem formschlüssigen Schaltelement zugeordnete Wegerfassungseinrichtung bestimmbar ist.

13. Verfahren nach einem der Ansprüche 1 bis 12, **dadurch gekennzeichnet, dass** der Zwischenbetriebszustand des formschlüssigen Schaltelementes über eine dem formschlüssigen Schaltelement zugeordnete Kontakterkennungseinrichtung ermittelt wird.

## Claims

1. Method for the operation of a transmission device (1) of a vehicle drive train having at least one drive machine, wherein the transmission device (1) is designed to form various transmission ratios with at least one positively locking shift element (A, F) and a plurality of frictionally locking shift elements (B, C, D, E), and during a closing process of the positively locking shift element (A, F) starting from an opened operating state, during which shift element halves of the positively locking shift element (A, F) are disengaged, into a closed operating state, during which the shift element halves are connected to one another in a positively locking, rotationally fixed fashion, and when an intermediate operating state of the positively locking shift element (A, F), for which positive locking between the shift element halves is prevented, is present, a difference in rotational speed is at least temporarily generated between the shift element halves, for which the positive locking can be engaged in the region of the positively locking shift element (A, F), wherein, in order to bring about the difference in rotational speed between the shift element halves of the positively locking shift element (A, F), at least the transmission capability of a frictionally locking shift element (E) is increased, **characterized in that** after the closing of the positively locking shift element (A, F) the transmission capability of the frictionally locking shift element (E) is reduced essentially to zero, as a result of which torque can no longer be transmitted via the frictionally locking shift element (E), and wherein after the reduction of the transmission capability of the frictionally locking shift element a further shift element (D) is connected into the force flux of the transmission device (1).

2. Method according to Claim 1, **characterized in that**, in order to generate the difference in rotational speed, a transmission capability of the frictionally locking shift element (E) is increased when at least one further shift element (F) is closed, wherein a transmission ratio ("4") of the transmission device (1) can be formed by means of the frictionally locking shift element (E) and the further shift element (F) in the closed state.

3. Method according to Claim 2, **characterized in that**, in order to form the transmission ratio ("4") which can be engaged in the transmission device by means of the frictionally locking shift element (E) and the further shift element (F), the positively locking shift element (A) is disconnected from the force flux of the transmission device (1).

4. Method according to one of Claims 1 to 3, **characterized in that** the shift elements (A to F) can be activated fluidically, and the frictionally locking shift element (E) is pre-filled during a rapid filling pulse when the further shift element (F) is closed.

5. Method according to Claim 4, **characterized in that** the transmission capability of the frictionally locking shift element (E) is increased after the expiry of a filling compensation phase which is subsequent to the rapid filling pulse.

6. Method according to Claim 5, **characterized in that** an activation force of the positively locking shift element (A), which transfers the positively locking shift element (A) at least approximately from the opened operating state into the closed operating state, is increased during or after the filling compensation phase of the frictionally locking shift element (E).

7. Method according to Claim 6, **characterized in that** the activation force of the positively locking shift element (A) is reduced when the intermediate operating state is detected, and in order to generate the difference in rotational speed between the shift element halves the transmission capability of the frictionally locking shift element (E) is increased.

8. Method according to Claim 6 or 7, **characterized in that** when a difference in rotational speed is present between the shift element halves of the positively locking shift element (A), the activation force of the positively locking shift element (A) is increased and the positively locking shift element (A) is transferred to the closed operating state, wherein the transmission capability of the frictionally locking shift element (E) is at least approximately reduced to zero when the positively locking shift element (A) is closed.

9. Method according to one of Claims 1 to 8, **characterized in that** the intermediate operating state of the positively locking shift element (A, F) can be determined as a function of a rotational speed signal (n_t) of a shaft of the transmission device (1).

10. Method according to one of Claims 1 to 9, **characterized in that** the intermediate operating state of the positively locking shift element can be determined as a function of the activation force of the positively locking shift element or an operating variable, equivalent thereto, of the transmission device.

11. Method according to Claim 10, **characterized in that** the operating variable is an activation pressure of the positively locking shift element.

12. Method according to one of Claims 1 to 11, **characterized in that** the intermediate operating state of the positively locking shift element can be determined by means of a travel detection device which is assigned to the positively locking shift element.

13. Method according to one of Claims 1 to 12, **characterized in that** the intermediate operating state of the positively locking shift element is determined by means of a contact-detection device which is assigned to the positively locking shift element.

## Revendications

1. Procédé pour faire fonctionner un système de transmission (1) d'une chaîne cinématique de véhicule comprenant au moins un moteur d'entraînement, le système de transmission (1) étant réalisé pour effectuer différents changements de rapports avec au moins un élément de commutation à engagement positif (A, F) et plusieurs éléments de commutation à engagement par friction (B, C, D, E), et pendant une opération de fermeture de l'élément de commutation à engagement positif (A, F), à partir d'un état de fonctionnement ouvert, dans lequel des moitiés d'élément de commutation de l'élément de commutation à engagement positif (A, F) sont hors d'engagement, jusqu'à un état de fonctionnement fermé, dans lequel les moitiés d'élément de commutation sont connectées l'une à l'autre de manière solidaire en rotation par engagement positif, et en présence d'un état de fonctionnement intermédiaire de l'élément de commutation à engagement positif (A, F), auquel une fermeture par engagement positif entre les moitiés d'élément de commutation est empêchée, une différence de vitesse de rotation entre les moitiés d'élément de commutation étant produite au moins temporairement, à laquelle l'engagement positif dans la région de l'élément de commutation à engagement positif (A, F) peut être enclenché, et, pour l'établissement de la différence de vitesse de rotation entre les moitiés d'élément de commutation de l'élément de commutation à engagement positif (A, F), au moins la capacité de transfert d'un élément de commutation à engagement par friction (E) étant augmentée, **caractérisé en ce qu'**après la fermeture de l'élément de commutation à engagement positif (A, F), la capacité de transfert de l'élément de commutation à engagement par friction (E) est essentiellement abaissée jusqu'à zéro, de sorte qu'aucun couple ne puisse plus être conduit par le biais de l'élément de commutation à engagement par friction (E), et après l'abaissement de la capacité de transfert de l'élément de commutation à engagement par friction, un élément de commutation supplémentaire (D) étant enclenché dans le flux de forces du système de transmission (1).

2. Procédé selon la revendication 1, **caractérisé en ce que** pour produire la différence de vitesse de rotation, une capacité de transfert de l'élément de commutation à engagement par friction (E) est augmentée lorsqu'au moins un élément de commutation supplémentaire (F) est fermé, un changement de rapport ("4") du système de transmission (1) pouvant être réalisé par le biais de l'élément de commutation à engagement par friction (E) et de l'élément de commutation supplémentaire (F) dans l'état fermé.

3. Procédé selon la revendication 2, **caractérisé en ce que** l'élément de commutation à engagement positif (A) est déconnecté du flux de forces du système de transmission (1) pour réaliser le changement de rapport ("4") pouvant être enclenché par le biais de l'élément de commutation à engagement par friction (E) et de l'élément de commutation supplémentaire (F) dans le système de transmission.

4. Procédé selon l'une quelconque des revendications 1 à 3, **caractérisé en ce que** les éléments de commutation (A à F) peuvent être actionnés fluidiquement et l'élément de commutation à engagement par friction (E) est pré-rempli pendant une impulsion de remplissage rapide lorsque l'élément de commutation supplémentaire (F) est fermé.

5. Procédé selon la revendication 4, **caractérisé en ce que** la capacité de transfert de l'élément de commutation à engagement par friction (E) est augmentée après l'écoulement d'une phase d'équilibrage de remplissage suivant l'impulsion de remplissage rapide.

6. Procédé selon la revendication 5, **caractérisé en ce qu'**une force d'actionnement de l'élément de commutation à engagement positif (A) transférant l'élément de commutation à engagement positif (A) au moins approximativement depuis l'état de fonctionnement ouvert dans l'état de fonctionnement fermé est augmentée pendant ou après la phase d'équilibrage de remplissage de l'élément de commutation à engagement par friction (E).

7. Procédé selon la revendication 6, **caractérisé en ce que** la force d'actionnement de l'élément de commutation à engagement positif (A) est abaissée une fois l'état de fonctionnement intermédiaire reconnu et pour produire la différence de vitesse de rotation entre les moitiés d'élément de commutation, la capacité de transfert de l'élément de commutation à engagement par friction (E) est augmentée.

8. Procédé selon la revendication 6 ou 7, **caractérisé en ce qu'**en présence d'une différence de vitesse de rotation entre les moitiés d'élément de commutation de l'élément de commutation à engagement positif (A), la force d'actionnement de l'élément de commutation à engagement positif (A) est augmentée et l'élément de commutation à engagement positif (A) est transféré dans l'état de fonctionnement fermé, la capacité de transfert de l'élément de commutation à engagement par friction (E) étant au moins approximativement abaissée à zéro lorsque l'élément de commutation à engagement positif (A) est fermé.

9. Procédé selon l'une quelconque des revendications 1 à 8, **caractérisé en ce que** l'état de fonctionnement intermédiaire de l'élément de commutation à engagement positif (A, F) peut être déterminé en fonction d'un signal de vitesse de rotation (n_t) d'un arbre du système de transmission (1).

10. Procédé selon l'une quelconque des revendications 1 à 9, **caractérisé en ce que** l'état de fonctionnement intermédiaire de l'élément de commutation à engagement positif peut être déterminé en fonction de la force d'actionnement de l'élément de commutation à engagement positif ou d'une grandeur de fonctionnement équivalente du système de transmission.

11. Procédé selon la revendication 10, **caractérisé en ce que** la grandeur de fonctionnement est une pression d'actionnement de l'élément de commutation à engagement positif.

12. Procédé selon l'une quelconque des revendications 1 à 11, **caractérisé en ce que** l'état de fonctionnement intermédiaire de l'élément de commutation à engagement positif peut être déterminé par le biais d'un dispositif de détection de course associé à l'élément de commutation à engagement positif.

13. Procédé selon l'une quelconque des revendications 1 à 12, **caractérisé en ce que** l'état de fonctionnement intermédiaire de l'élément de commutation à engagement positif est déterminé par un dispositif de détection de contact associé à l'élément de commutation à engagement positif.
